# EUROPÄISCHE PATENTANMELDUNG

(11) **EP 0 950 491 A2**
(43) Veröffentlichungstag der Anmeldung: **20.10.1999**
(21) Anmeldenummer: 99105709.2
(22) Anmeldetag: 20.03.1999
(51) Int. Cl.: B29C 44/12

(54) **Kaschiertes Formteil zur Innenverkleidung von Automobilen und Verfahren zu seiner Herstellung**

(30) Priorität: 03.04.1998 DE 19814956
(71) Anmelder: Heidel GmbH & Co. KG, D-49504 Lotte (DE); Sommer Allibert-Lignotock GmbH, 57584 Scheuerfeld (DE)
(72) Erfinder: Hune, Rupert, 49088 Osnabrück (DE); Jordan, Michael, 45721 Haltern (DE)
(74) Vertreter: von Raffay, Vincenz, Dipl.-Ing.

(57) **Zusammenfassung**

Das Verfahren dient der Herstellung von Kfz-Innenverkleidungen mit einem Träger (3), der auf der in Gebrauchslage sichtbaren Seite mit einer Folie (1) überzogen ist. Zumindest einige Abschnitte zwischen der Folie und dem Träger sollen mit Polyurethan hinterschäumt werden. Im einzelnen ist das Verfahren durch folgende Schritte gekennzeichnet:
1) Herstellen der Folie (1) mit Übermaß (1a) einschließlich eines Umbugs an den Rändern durch Tiefziehen oder dergleichen;
2) Beschneiden der Folie (bei 1a) auf das gewünschte Endmaß;
3) Einsetzen des luftdurchlässigen Trägers (3) in die Folie (1) einschließlich Eindrücken in die umgebogenen Ränder;
4) Einlegen dieses Verbundes in das Unterteil (5) eines Schäumwerkzeuges und Fixieren durch Vakuum;
5) Einfahren des Oberteils (6) des Schäumwerkzeuges und dabei vollständiges Umbiegen der Ränder der Folie (1) auf die gewünschte endgültige Form;
6) Einbringen des Polyurethans in das geschlossene Formwerkzeug zum Hinterschäumen und Verkleben der Folie auch im Bereich der gebogenen Ränder mit dem Träger.
Hierdurch wird eine Kfz-Innenverkleidung mit hinterschäumten Abschnitten hergestellt, wobei das endgültige Umbiegen der hinterschnittenen Ränder durch das Formwerkzeug erfolgt, wobei die Verklebung im Bereich dieser umgebogenen Ränder durch das Polyurethan sichergestellt wird, das gleichzeitig die hinterschäumten Abschnitte bildet.

## Beschreibung

Die Erfindung betrifft ein Formteil gemäß dem Oberbegriff des Anspruches 1, sowie ein Verfahren zu seiner Herstellung.

Kaschierte Formteile, deren Kaschierung aus geformten Folien besteht, sind Stand der Technik. Unter den Begriff "Folie" fallen in diesem Zusammenhang nicht nur tiefgezogene Folien, sondern auch sogenannte "Slush- oder Sprühhäute".

Es ist auch seit langem üblich, die Kaschierfolien mit Schaumstoff zu hinterfüttern, sei es nun um eine bessere Haptik (Griffigkeit) zu gewährleisten, sei es auch, um in sicherheitsrelevanten (Aufprall-)Bereichen den Insassenschutz zu verbessern.

Zur Verbesserung der Haptik werden schaumstoffhinterlegte Folien (Folien mit fertig aufgebrachten Scaumrücken) verwendet, deren Schaumrücken ca. 2 mm dick ist, dickere "Sicherheitspolster" realisiert man durch Schaumstoffpads (Formstücke aus Schaumstoff), die, separat vorgefertigt, auf die entsprechenden Bereiche des Trägerteils geklebt werden. In beiden Fällen wird die Kaschierung mit Hilfe von Klebern (Haftvermittlern) aufgebracht und in gesonderten Werkzeugen "umgebugt", d.h. um die Kanten des Trägerteiles herumgeklebt. Dünne Schaumrücken auf der Kaschierfolie haben zusätzlich den Nachteil, daS Feinheiten der Formteilkontur "verschleifen", also nur mangelhaft wiedergegeben werden, die Verwendung vorgefertigter "Pads" ist umständlich und teuer. Für Instrumententafeln ist es auch üblich, Kaschierfolie und Trägerteil zusammenzuschäumen, wobei jedoch die Schaumstoff-Schicht verhältnismäßig dick (ca. 1 cm und mehr) ist, da es üblich ist, den unentwickelten Schaum (in der Regel Polyurethan-Schaum) nahezu drucklos in die Schaumform einzubringen. In jedem Fall ist jedoch ein separates Umbugen notwendig, und zwar unter Verwendung eines zusätzlichen Klebers.

Bei dem angeführten Stand der Technik ist es Aufgabe der Erfindung, ein Innenverkleidungsteil der eingangs beschriebenen Art anzugeben, bei dem optische und sicherheitstechnische Gegebenheiten durch Variation der Schaumschicht-Dicke in einem weiten Bereich optimiert sind. Aufgabe der Erfindung ist es weiterhin, ein Fertigungsverfahren für derartige Formteile anzugeben, das die Variation der Schaumstoff-Dicke zwischen Trägerteil und Kaschierfolie in der angegebenen Größenordnung ermöglicht, und das darüber hinaus das aufwendige Umbugen in gesonderten Werkzeugen entbehrlich macht.

Bezüglich des Formteiles wird die Aufgabe durch das Kennzeichen des Anspruches 1 gelöst, bezüglich des Herstellungsverfahrens durch den kennzeichnenden Teil des Anspruches 5. Die abhängigen Ansprüche 2 bis 4 und 6 bis 8 geben jeweils vorteilhafte Weiterbildungen der Erfindung an. Dadurch, daß das Trägerteil vorzugsweise zumindest in Teilbereichen luftdurchlässig ist, ist eine durchgehend einstückig ausgebildete Schaumstoff-Schicht fehlerfrei zu realisieren, da sich bei einem Schäumungsprozeß keine störenden (weil lunkerbildende) Lufteinschlüsse im Schaumstoff bilden können. Somit läßt sich auch eine bereichsweise dünne Schaumstoff-Schicht neben dickeren Polsterbereichen realisieren. Separat aufzubringende Polsterpads können ebenso entfallen, wie die Verwendung von schaumstoffhinterlegten Folien, die zum "Verschleifen" von feinen Oberflächenstrukturen führen. Zusätzlich entfällt die Verwendung von Kaschierklebern, wodurch nicht nur Kosten gespart werden, sondern auch die Arbeitsschutzbedingungen wesentlich verbessert werden, da bei einer einstückigen Hinterschäumung der Schaum selbst als Kleber wirkt. Die Luftdurchlässigkeit des Trägerteiles, ggf. durch eine zusätzliche Perforation im Umbugbereich unterstützt, sorgt dabei dafür, daß der Schaum auch in den Umbugbereich durchtritt und für eine sichere Fixierung des Umbuges sorgt. Ganzflächige Luftdurchlässigkeit des Trägerteiles ist dabei optimal. Holz- bzw. Naturfaser-Verbundwerkstoffe sind von Natur aus luftdurchlässig, sie können bei Bedarf örtlich (im Umbugbereich) so porös gestaltet werden, daS ein Schaumdurchtritt in den Umbugbereich keine Schwierigkeiten bereitet. Ein möglicher Verlust an Festigkeit des Trägerteiles wird dabei durch die Tränkung des porösen Bereiches mit Schaum zumindest kompensiert.

Bei dem erfindungsgemäßen Verfahren wird die Kaschierfolie durch Tiefziehen oder eine entsprechende Slush-Technik in einem gesonderten, vorgeschalteten Arbeitsgang mit Übermaß hergestellt. An den Rändern im Bereich des späteren Umbugs also, weist sie Hinterschneidungen auf, die aber noch nicht die endgültige Umbugform aufweisen, die sie in dem fertiggestellten Produkt haben sollen. Die überstehenden Ränder, d.h. das Übermaß, werden dann abgeschnitten, so daß die Folie mit ihren endgültigen Abmessungen und nahezu in ihrer endgültigen Form vorliegt. In diese Folie wird dann im Bereich der bereits mehr oder weniger stark umgebogenen Ränder der Träger eingelegt und eingedrückt. Die umgebogenen Ränder bilden praktisch Hinterschneidungen, in die der Träger eingedrückt wird.

Dieser mehr oder weniger lose Verbund von Träger und Folie wird dann in das Unterteil des Schäumwerkzeuges eingelegt und dort durch Anlegen von Vakuum fixiert. Im Anschluß daran wird das Oberteil in das Formwerkzeug eingefahren. Hierbei werden die Ränder vollständig auf die gewünschte endgültige Form gebogen. Anschließend wird das Polyurethan eingebracht und es erfolgt das Aufschäumen und damit das Hinterschäumen und gleichzeitig das Verkleben im Bereich der umgebogenen Ränder.

Erfindungsgemäß wird der Umbug beim Herstellen der Folie vorgeformt und dann durch das obere Oberteil des Formwerkzeuges in seine endgültige Form gebracht. Die dauerhafte Verbindung zwischen den fertig umgebogenen Rändern und dem Träger erfolgt dann durch das Polyurethan. Der Träger ist luftdurchlässig, damit die Luft beim Eingeben des Polyurethans entweichen kann.

In vorteilhafter Weise kann der Träger nicht nur luftdurchlässig, sondern auch porös sein, daß mehr oder weniger viel Polyurethan vor dem chemischen Ausreagieren hindurchtreten kann, um für das gewünschte Verkleben zu sorgen. Eine an sich nicht übliche Injektion des unentwickelten Schaumes unter Überdruck in das geschlossene Schäumwerkzeug begünstigt die Schaumverteilung erheblich, so daß auch flächige Bereiche, die nur dünn hinterschäumt sind (ca. nur 2 mm) problemlos realisierbar sind. Grundsätzlich erfolgt die Herstellung der Innenverkleidung vollständig in dem Formwerkzeug, d.h. das Umbiegen auf die endgültig gewünschte Form erfolgt durch das Oberteil des Formwerkzeuges. In einigen komplizierten Eckbereichen kann es sein, daß besondere Umbugwerkzeuge zum Einsatz kommen. Dieses ist aber ein Ausnahmefall.

Im folgenden wird die Erfindung unter Hinweis auf die Zeichnung anhand eines Ausführungsbeispieles näher erläutert.

Es zeigt:
- Fig. 1: eine Teilansicht einer tiefgezogenen Folie mit Übermaß im Schnitt;
- Fig. 2: eine der Fig. 1 entsprechende Teilansicht, jedoch mit abgeschnittenem Übermaß;
- Fig. 3: eine der Fig. 2 entsprechende Teilansicht einer tiefgezogenen und abgeschnittenen Folie mit eingelegtem oder eingedrücktem Träger; und
- Fig. 4: einen Schnitt durch das geschlossene Formwerkzeug mit eingelegter Folie und eingelegtem Träger nach dem Einbringen und Aufschäumen des Polyurethans.

In der Zeichnung ist anhand von vier Figuren der Verfahrensablauf veranschaulicht.

Zuerst wird die Folie 1 durch Tiefziehen mit Übermaß 1a hergestellt. In bestimmten Bereichen können Vorsprünge oder Noppen 2 vorgesehen sein, die einer späteren Fixierung des Trägers dienen und insbesondere dort vorgesehen sein können, wo bei dem endgültigen Produkt eine Öffnung, beispielsweise zur Aufnahme eines Lautsprecher in der Tür, vorgesehen ist. Diese Abschnitte werden dann wieder entfernt.

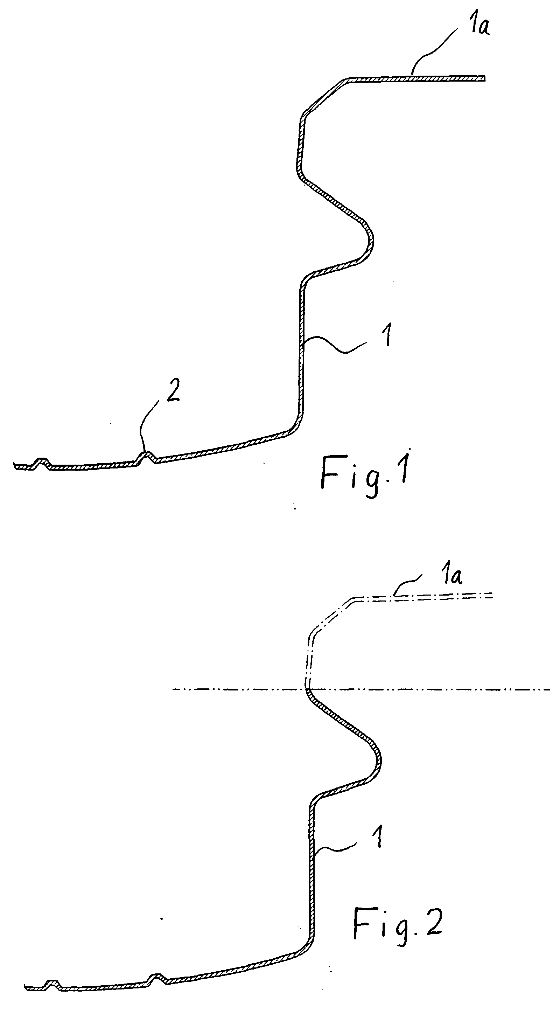

In Fig. 2 ist das Übermaß Ja abgeschnitten, so daß die Folie 1 praktisch in dem endgültigen Maß vorliegt. Der Umbugbereich, der sich an das abgeschnittene übermaß 1a anschließt, ist bereits verhältnismäßig stark umgebogen und bildet eine entsprechende Hinterschneidung. Er nimmt aber noch nicht die Form ein, die er bei dem fertiggestellten Produkt aufweisen soll.

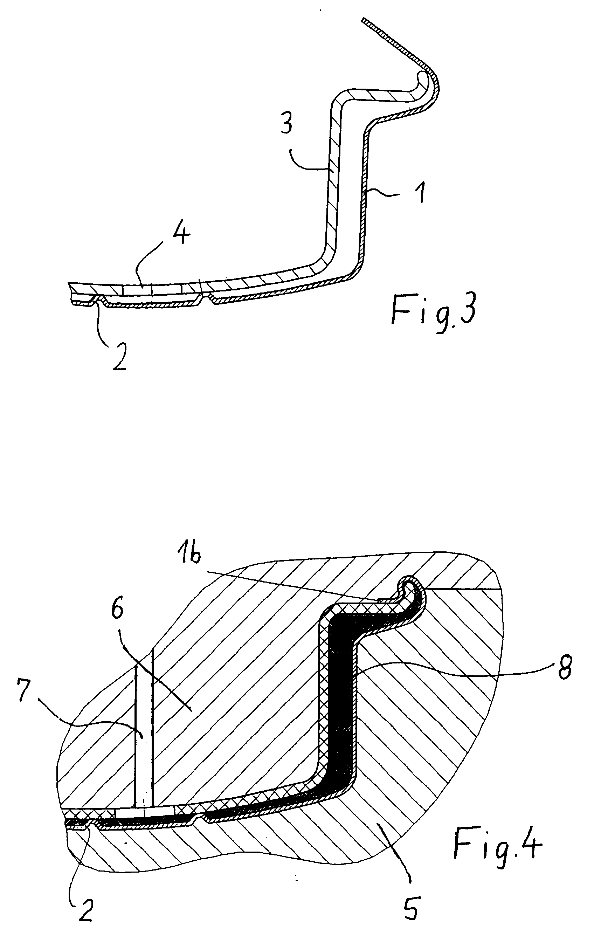

In Fig. 3 ist ein Träger 3 aus luftdurchlässigem oder porösem Material in die Folie 1 eingelegt oder eingedrückt. Die Ränder des Trägers liegen dabei in den umgebogenen Rändern der Folie. Die Vorsprünge 2 sorgen für ein Abstützen des Trägers und eine Fixierung, so daß ein Raum zur Aufnahme des Polyurethans freibleibt.

Der in Fig. 3 dargestellte Verbund wird dann in das Unterteil 5 eines entsprechend gestalteten Formwerkzeuges eingelegt und durch Vakuum fixiert. Nun wird das Oberteil 6 eingefahren und drückt die umgebogenen Ränder der Folie in die endgültige Form 1b. Wenn das Formwerkzeug geschlossen ist, wird durch einen Kanal 7 und eine Öffnung 4 in dem Träger das Polyurethan eingebracht. Dieses schäumt auf und bildet die hinterschäumten Bereiche 8 und sorgt für eine Verklebung im Bereich des vollständig umgebogenen Randes 1b. Eine gewisse Porösität des Trägers 3, insbesondere in diesem Bereich, unterstützt die Verklebung.

Wenn der Verbund, wie er in Fig. 3 dargestellt ist, bei dem die Folie bereits das Endmaß aufweist und der Umbug bereits vorhanden ist, aber noch nicht seine endgültige Form einnimmt, in das Unterteil 5 des Formwerkzeuges eingelegt und das Oberteil 6 eingefahren wird, wird der Umbug in seine endgültige Form 1b gebracht. Durch Einbringen des Polyurethans werden die gewünschten, geschäumten Abschnitte 8 der Innenverkleidung erzeugt und gleichzeitig erfolgt die Verklebung im Bereich der umgebogenen Ränder.

## Patentansprüche

1. Kaschiertes Formteil zur Innenverkleidung von Automobilen und Verfahren zu seiner Herstellung, bestehend aus einem formstabilen Trägerteil, das sichtseitig mit einer Kaschierfolie überzogen ist, die den Rand des Trägerteils umgreift, wobei zwischen Trägerteil und Kaschierfolie eine Schaumstoff-Schicht angeordnet ist, dadurch gekennzeichnet, daß die Schaumstoff-Schicht, einstückig durchgehend ausgebildet, die gesamte Fläche zwischen der Kaschierfolie und dem Trägerteil einschließlich des Umbugbereiches auf der Trägerteilrückseite überdeckt, wobei die Dicke der SchaumstoffSchicht weniger als 1 mm im Umbugbereich und mehr als 10 mm in sicherheitsrelevanten Aufprallbereichen beträgt.

2. Formteil nach Anspruch 1, dadurch gekennzeichnet, daß das Trägerteil aus einem zumindest in Teilbereichen luftdurchlässigem Werkstoff besteht.

3. Formteil nach Anspruch 1, dadurch gekennzeichnet, daß das Trägerteil zumindest im Umbugbereich eine Perforation aufweist.

4. Formteil nach Anspruch 1, dadurch gekennzeichnet, daß das Formteil flächige Bereiche besitzt, bei denen die Dicke der Schaumstoff-Schicht 1 bis 3 mm beträgt.

5. Verfahren zur Herstellung von Formteilen gemäß Anspruch 1, gekennzeichnet durch folgende Schritte:
(1) Herstellen der Folie (1) mit Übermaß (1a) einschließlich eines Umbugs an den Rändern durch Tiefziehen oder dergleichen;
(2) Beschneiden der Folie (bei 1a) auf das gewünschte Endmaß;
(3) Einsetzen des Trägers (3) in die Folie (1) einschließlich Eindrücken in die umgebogenen Ränder;
(4) Einlegen dieses Verbundes in das Unterteil (5) eines Schäumwerkzeuges und Fixieren durch Vakuum;
(5) Einfahren des Oberteiles (6) des Schäumwerkzeuges und dabei vollständiges Umbiegen der Ränder der Folie (1) auf die gewünschte endgültige Form;
(6) Einbringen des Polyurethans in das geschlossene Formwerkzeug zum Hinterschäumen und Verkleben der Folie auch im Bereich der gebogenen Ränder mit dem Träger.

6. Verfahren nach Anspruch 5, dadurch gekennzeichnet, daß das Polyurethan unter erhöhtem Druck in das geschlossene Formwerkzeug eingebracht wird.

7. Verfahren nach Anspruch 1, dadurch gekennzeichnet, daß ein Träger eingelegt wird, der nicht nur luftdurchlässig, sondern auch so porös ist, daß Polyurethan hindurchtritt.

8. Verfahren nach Anspruch 1 oder 2, dadurch gekennzeichnet, daß das Formwerkzeug im Bereich komplizierter Ecken zusätzliche Umbugwerkzeuge aufweist, die in diesen Bereichen ein vollständiges Umbiegen der Ränder der Folie (1) bewirken.
